Europäisches Patentamt

(19) European Patent Office

Office européen des brevets

(11) Publication number: 0 076 561
A1

# (12) EUROPEAN PATENT APPLICATION

(21) Application number: 82303907.8

(22) Date of filing: 23.07.82

(51) Int. Cl.³: F 01 M 1/06
F 16 C 3/14, F 02 P 1/02

(30) Priority: 24.07.81 GB 8122854
24.07.81 GB 8122855

(43) Date of publication of application:
13.04.83 Bulletin 83/15

(84) Designated Contracting States:
AT BE CH DE FR GB IT LI LU NL SE

(71) Applicant: Kinnersly, Richard Furneaux
Bramfield Slab Lane
West Wellow Nr. Romsey Hampshire(GB)

(72) Inventor: Kinnersly, Richard Furneaux
Bramfield Slab Lane
West Wellow Nr. Romsey Hampshire(GB)

(74) Representative: Symes, Robert George et al,
FORRESTER & BOEHMERT Widenmayerstrasse 4/I
D-8000 München 22(DE)

(54) Assembling, lubricating and ingition of an internal-combustion engine.

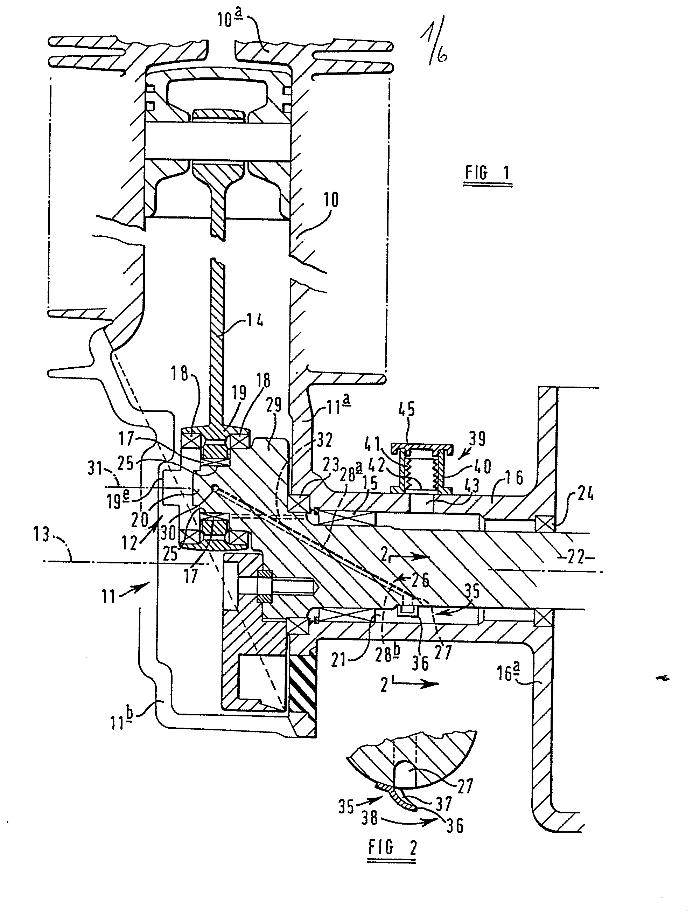

(57) An assembly incorporated in an internal combustion engine or gas compressor (Figure 1) has a crankshaft (12) lubrication system comprising a first chamber (21) in the locality of a support bearing (15) for the crankshaft (12) and a second chamber (25) in the locality of a crank pin (20) of the crankshaft (12), a first duct (26) extending through the crankshaft (12) between the first and second chambers (21, 25), a second duct (32) also extending through the crankshaft (12) to form, in combination with the chambers (21, 25) and first duct (26), a circuit for lubricant. A pressure inducing means (35) promotes flow of lubricant around the circuit.

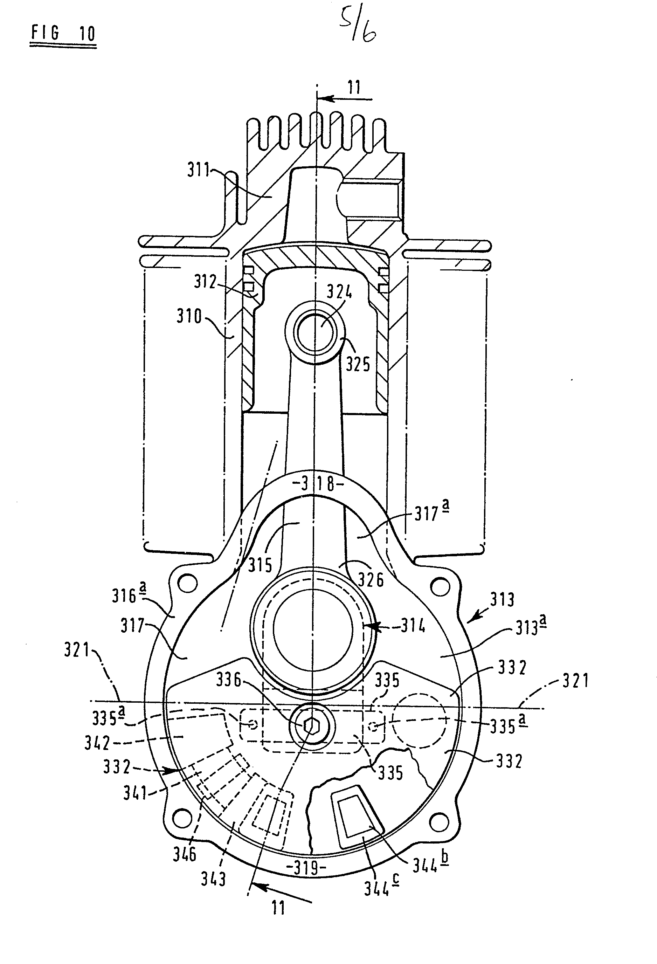

Further, (as seen in Figure 10) the assembly has a cylinder head (311), cylinder (310) and a first part (313a) of a crank case (313) formed integrally with each other and a single aperture (317) provides access for assembly of a piston (312), connecting rod (315), and crankshaft (314) and for machining of the cylinder bore. This structure enables assembly to be carried out by the method of inserting the piston (312) and connecting rod (315) and manipulating the big end (326) of the connecting rod (315) over the crank pin (331) of the crankshaft (314). The crankshaft is provided with a structurally separate counterweight (332) which acts also as a carrier for a magnet (333) of a flywheel magneto and which is secured to the crankshaft (314) by a keying member (335) having a coefficient of thermal expansion compatible with that of the crankshaft (314) and onto which the counter-weight (332) is cast.

./...

Croydon Printing Company Ltd.

EP 0 076 561 A1

FIG 1

FIG 11

007.6561

see front page

Title: "Construction and method of assembling piston, cylinder, and crankshaft assembly, and lubrication and ignition system therefor."

This invention relates to a piston, cylinder, and crankshaft assembly (hereinafter referred to as being of the kind specified) of the kind commonly employed in internal combustion engines and gas compressors and which comprise a cylinder to and from which working fluid is admitted and exhausted, means controlling the admission and exhaust of the working fluid, a piston reciprocable in the cylinder longitudinally of the axis thereof, a crank case, a crankshaft rotatable in the crank case about an axis at right angles to that of the cylinder and situated adjacent to one end (herein referred to as the base end) of the cylinder, the crankshaft having a crank pin spaced radially from the axis of rotation of the crankshaft, and a connecting rod connecting the piston to the crankshaft to transmit motion between the reciprocatory piston and the rotary crankshaft.

When the assembly forms part of an internal combustion engine in which the mixture of the working fluid and fuel undergoes ignition by generation of an electric spark within the cylinder, ignition means are then provided for effecting such ignition. In other cases, for example where ignition is effected by way of compression of the mixture of working fluid and fuel no such ignition means need be provided, nor need such ignition means be provided where the assembly of the kind specified forms part of a gas compressor, for example an air compressor.

An assembly of the kind specified forming part of an internal combustion engine (herein called the kind referred to) is described and claimed in the specification of British patent No. 1,296,830 granted to the inventor of the present application and in which the engine comprises a cylinder, a piston mounted for reciprocating sliding movement within said cylinder, a connecting rod rotatably connected with said piston, a crankshaft, a crank pin rotatably connecting said connecting rod with a crank web of said crankshaft, an engine housing, said crankshaft being rotatably mounted in said housing, and further comprising:

(a) a first lubricant storage chamber extending about said crankshaft and defined between said crankshaft and said housing,

(b) first bearing means rotatably mounting said crankshaft in said housing and located in said first lubricant storage chamber,

(c) lubricant pre-stored in said first lubricatant storage chamber and in direct contact with said first bearing means to permanently lubricate said first bearing means,

(d) means sealing the ends of said first lubricant storage chamber to retain said lubricant permanently therein,

(e) a second lubricant storage chamber extending about said crank pin and defined between said crank pin and said crank web,

(f) second bearing means mounting said crank pin for rotation in said crank web and located in said second lubricant storage chamber,

(g) lubricant pre-stored in said second lubricant storage chamber and in direct contact with said second bearing means to permanently lubricate said second bearing means, and

(h) means sealing said second lubricant storage chamber to permanently retain said lubricant therein.

In this form of internal combustion engine it is necessary that the crank pin should be rotatably mounted in, and relatively to, the web of the crank whereas in certain case it would be more convenient to adopt a more conventional construction in which the crank pin is fixed relatively to the web of the crank and the big end of the connecting rod is rotatable on and with respect to the crank pin.

The invention, as hereinafter defined, has been developed primarily for application to a "oilless" engine. By "oilless" is meant that in operation (in the case of a two stroke engine) there is no introduction of lubricant by way of the fuel or working fluid, and that (in the case of a four stroke engine) the crank case does not contain lubricant which is free in the sense of forming a reservoir which is used to lubricate big end and little end bearings and crankshaft supporting bearings by reason of such reservoir of lubricant being agitated by entry of the crankshaft and associated similarly moving parts. The conventional lubrication systems result in significant consumption or contamination of lubricant over a period of time.

It is to be understood, however, that although the primary application of the invention is to "oilless" engines, the invention may be applied to engines where there is some free lubricant in the crank case (in the case of four stroke engines) and where there is some introduction of lubricant by way of the fuel or working fluid supply (in the case of two stroke engines).

Further, both of the aspects of the invention may be applied to gas compressors.

A first aspect of the invention is concerned with a more sophisticated lubrication system for providing lubrication at the bearing between the connecting rod and the crank pin, and at a supporting bearing in the crank case or the crankshaft itself.

According to the first aspect of the invention, an assembly of the kind specified includes a lubrication system for a crankshaft supporting bearing means, and a bearing means at the connection between the connecting rod and crank pin, such system comprising a first lubricant storage chamber at the supporting bearing means, a second lubricant storage chamber at the connecting rod bearing means, a first duct extending through the crankshaft serving to connect the first chamber to the second chamber, a second duct also extending through the crankshaft serving to connect the second chamber to the first chamber to form a lubricant circuit, and means responsive to rotation of the crankshaft to cause lubricant to circulate around the circuit.

The second lubricant storage chamber may move in an orbit in consequence of crankshaft rotation, and may have a first, outer, part which is radially beyond the first lubricant storage chamber and having a second, inner, part extending radially inwardly of at least part of the first lubricant storage chamber, the first duct being so arranged as to connect the first chamber with the outer part of the second chamber, and the second duct being so arranged as to connect the inner part of the second storage chamber with the first chamber.

Preferably, the means to cause lubricant to circulate is provided in, or in association with the first chamber, and comprises a pressure inducing means which is operable in response to rotation of the crankshaft for causing a pressure gradient to be established along the first duct in a direction to bring about flow of the lubricant from the first chamber to the second chamber, the pressure in the first chamber, however, being maintained below a value which would prevent delivery of lubricant from the second part of the second chamber along the second duct back to the first chamber.

That end of the second duct which communicates with the second part of the second chamber may be situated radially inwardly of, or at the same radius as, that end of the second duct which communicates with the first chamber. With this arrangement, there may also be a pressure gradient in the second duct promoting flow of lubricant from the second chamber back to the first chamber through the second duct, or at least absence of any pressure gradient counteracting such flow.

The pressure inducing means for establishing a pressure gradient in the first duct may comprise a scoop means provided on the crankshaft and rotating therewith for collecting lubricant from the first chamber as the crankshaft rotates and feeding it into that end of the first duct which communicates with the first chamber.

A second aspect of the invention is applicable to the engine the subject of the British patent 1,296,830 and consists in the modification that the second lubricant storage chamber is formed as a cavity in the connecting rod itself, and that the crank pin is integral with or fast with the crank web.

Conventional forms of assembly of the kind specified commonly comprise a cylinder head which is structurally separate from the cylinder itself (i.e. the cylinder block or barrel).

The crank case commonly takes various forms. It may comprise a first part which is integrally connected with the cylinder at the base end thereof, and a second (cover) part forming the base of the crank case and which is secured to the first part but is separable therefrom over parting surfaces on the first and second parts which lie generally in a plane at right angles to the cylinder axis. Another common form of crank case is one which is structurally separate from the cylinder and is secured thereto but separable therefrom at parting surfaces presented by the cylinder around its base and complementary surfaces on the crank case.

The crank case may be made in one piece or it may be split medially in a plane parallel to that in which the connecting rod moves or, as before, it may include first and second parts separable from each other in a plane at right angles to the cylinder axis as already mentioned.

While these conventional constructions have certain advantages, notably in achieving simplification of the form and hence achieving convenience and low cost in the manufacture of individual components, such constructions do entail certain disadvantages among which are the number of assembly operations to be performed in building the complete assembly.

Such operations require manual handling and manual skill to achieve correct assembly and especially where light alloys such as aluminium alloys are entailed in the production of one or more components require close attention to tightening torques supply to fastening elements, all of which contributes significantly to the cost of manufacture.

Alternatively, assembly requires the provision of extremely costly automated assembly apparatus which is economically justifiable only for very large scale production.

Furthermore, the joint structures requires at the parting surfaces between the components require to be made gas tight in some cases, and liquid tight in others, to establish the required conditions for satisfactory and reliable operation of the assembly, and the provision and assembly of such joint structures again requires skill, and the existence of the joint structures is a potential source of failure.

A proposal has been made to form a cylinder head, cylinder (barrel), and crank case as a unitary member, the crank case having respective openings for access to the cylinder bore for machining for assembly of the piston, and for assembly of the crankshaft. However, such proposal had serious disadvantages as regards access to the cylinder bore assembly of the connecting rod to the piston, as well as involving plural joint structures between the crank case and covers associated with the respective openings.

A further object of the present invention is to mitigate these disadvantages and is, in effect, based on the concept of eliminating as many as possible of the assembly operations consistent with the preservation of ability still to produce the assembly required without encountering unacceptable complexity in production of the components, and without encountering inability to perform a desired fewer number of assembly operations by reason of incompatible geometry between the components to be assembled.

According to the third aspect of the invention there is provided an assembly of the kind specified wherein a cylinder head, cylinder, and a first part of the crank case are all integrally connected with each other, and the crank case comprises a second part secured to, but separable from, the first part by way of parting surfaces defining, in the case of the first part, a single access aperture having the following characteristics:

(a) presention of an unobstructed area having a boundary of a form, size and orientation to circumscribe an axial projection of the interior surface of the cylinder as viewed along the cylinder axis,

(b) a shape, size and orientation to present an unobstructed passageway for introduction of the piston and connecting rod into the base end of the cylinder and crank case for assembly of the connecting rod with the crankshaft.

In certain cases it may be desirable that the characteristics of the access aperture shall permit of introduction of the connecting rod and the piston pre-assembled together.

The form of connection between the piston and connecting rod need not be such as to provide any play or lost motion (other than normally provided) to enable the connecting rod to be moved axially over one end of the crank pin into circumscribing relation with the latter.

There is considerable latitude as to the geometry of the parting surface which forms the boundary of the aperture in the first part of the crank case, but in a preferred form of the invention this boundary lies in or close to a plane (herein called the boundary plane) defined by two intersecting reference lines, one of which extends from a position adjacent to one side of the cylinder at the base end of the cylinder obliquely away from the cylinder towards the base of the crank case passing through a prolongation of the axis of the cylinder and terminating adjacent to the opposite side of the cylinder, and the other of which is mutually perpendicular to the axis of the cylinder and the crankshaft axis.

A further feature of the invention is that the crankshaft may, and preferably does comprise a shaft proper by means of which the crankshaft is rotatably supported in the crank case, a crank web extending radially in one direction from the shaft proper and carrying the crank pin, and a counter balance weight situated at a position diametrically opposed to the crank web and crank pin but coplanar or approximately coplanar with the crank web, the counter balance weight being formed as a structurally separate part which is detachably secured to the remainder of the crankshaft (i.e. to the shaft proper or to the crank web). By forming the crankshaft in this way introduction of the crankshaft is facilitated by placing the crankshaft in a rotational position in which the crank web and crank pin is removed from the base end of the cylinder to an extent which permits of moving it axially into an installed position past the big end of the connecting rod protruding from the base end of the cylinder. For assembly of the big end with the crank pin, the crankshaft can be rotated into a position in which the crank web and crank pin are nearer to the base end of the cylinder. Further, the crankshaft can then be rotated to expose that part of the crankshaft to which the counter balance weight is required to be assembled, the latter being assembled and secured through the access aperture.

A method of assembling the component parts of an assembly in accordance with the third aspect of the invention as herein defined comprises the steps of:-

(a) assembling together the piston and a connecting rod having an unsplit big end while access to the piston is available for passage of a gudgeon pin through aligned openings in the little end of the connecting rod and piston,

(b) introducing the piston through said single aperture into the base end of the cylinder,

(c) moving the big end of the connecting rod while the connecting rod remains assembled at its little end with the piston into a position in the crank case and cylinder such as to afford access to a support bearing for the crankshaft,

(d) introducing the crankshaft presenting a free-ended crank pin into the support bearing afforded by the crank case through said single aperture with the free end of the crank pin presented towards said aperture,

(e) relatively moving the connecting rod and crankshaft to pass the big end of the connecting rod over the crank pin preparatory to closing the single aperture by assembly and securement of the second part of the crank case to the first part of the crank case.

The moving of the big end of the connecting rod into the position affording access to the crankshaft support bearing may entail rotation of the piston with the connecting rod connected thereto by way of the gudgeon pin about the axis of the cylinder. Likewise, this form of movement may also be entailed in passing the big end over the crankpin.

A further feature of the invention is concerned with an assembly of the kind specified forming part of an internal combustion engine in which the mixture of the working fluid and fuel undergoes ignition by an electric spark within the cylinder produced by a magneto and in which the magneto comprises relatively movable elements, one at least of which is a permanent magnet and which collectively define a magnetic circuit of a configuration to provide a magnetic flux change in at least one limb of the magnetic circuit in response to movement of one of the elements past the other element, one of these elements being mounted on the crankshaft and the other on the crank case.

The element which is mounted on the crankshaft, whether it be the permanent magnet or simply an element made of magnetic material (i.e. magnetically susceptible material), requires that the crankshaft or the part thereof which carries such element shall be made of non-magnetic material in order to avoid the presentation of undesirable magnetic leakage paths and conveniently, therefore, the counterweight provided as part of the crankshaft, as a structurally separate part, may be utilised for this purpose and requires to be made of a non-magnetic material.

On the other hand, the remaining portion of the crankshaft is best made of a ferrous material (which is intrinsically magnetically susceptible) and a problem arises because of differential thermal expansion between the non-magnetic counterweight and the remainder of the crankshaft made of magnetic material and which can give rise to loosening, imprecise location, and possibly dangerous slackness in attachment means provided to secure the counterweight to the remainder of the crankshaft.

Thus, a fourth aspect of the present invention resides in the provision of an assembly of the kind specified forming part of an internal combustion engine in which the mixture of the working fluid and fuel undergoes ignition by an electric spark within the cylinder produced by a magneto, and in which the magneto comprises relatively movable elements, one at least of which is a permanent magnet and which collectively define a magnetic circuit of a configuration to provide a magnetic flux change in at least one limb of the magnetic circuit in response to movement of one of the elements past the other element, one of these elements being mounted on the crankshaft and the other on the crank case, and in which the counter balance weight is made of non-magnetic material and forms a carrier portion for one of the elements of the magnetic circuit of the magneto, and is itself held in secured assembled relation with the remainder of the crankshaft through the intermediary of attachment means of a form, and of a material, selected to avoid loosening due to differential thermal expansion between the carrier portion of the counterweight and the remainder of the crankshaft.

In a preferred arrangement the attachment means includes a keying member having a thermal coefficient of expansion compatible with that of the remainder of the crankshaft, in the sense that the difference between the two coefficients of expansion is small enough not to give rise to any loosening under temperature cycling in normal operation of the engine between the keying member and the remainder of the crankshaft, the keying member being made fast with respect to the carrier portion of the counter- weight during assembly at a temperature higher than that reached during normal operation of the engine so that, despite a greater difference of the coefficient of expansion as between the keying member and the carrier portion of the counterweight, again no loosening takes place.

The preferred form and disposition of the movable element of the magnetic circuit which is mounted on the crankshaft is one in which it presents pole faces axially of the crankshaft, and the other element of the magnetic circuit (stationary) is mounted on one end of the crank case and presents pole faces internally of the latter for cooperation with those of the movable element as the crankshaft rotates.

The invention will now be described, by way of example, with reference to the accompanying drawings wherein:-

FIGURE 1 is a fragmentary view in side elevation and in vertical cross-section medially of the cylinder and crank case of one embodiment of assembly of the kind specified forming part of an internal combustion engine and in accordance with the first aspect of the present invention;

FIGURE 2 is a fragmentary cross-sectional view on the line 2-2 of Figure 1 on an enlarged scale;

FIGURE 3 is a view similar to that of Figure 1 illustrating an embodiment of the second aspect of the invention;

FIGURE 4 is a fragmentary view on an enlarged scale of one form of big end of the connecting rod viewed along the axis of the crank pin and applicable to either of the embodiments of Figures 1 and 2 or Figure 3;

FIGURE 5 is a view in section on the line 5-5 of Figure 4;

FIGURE 6 is a view similar to Figure 4 showing a modification;

FIGURE 7 is a view of the modification of Figure 6 in section on the line 7-7 of Figure 6;

FIGURE 8 is a view of the modification of Figure 6 in section on the line 8-8 of Figure 6;

FIGURE 9 is a fragmentary view of a modification of the embodiment of Figure 1 in which the crank pin is supported between a pair of axially spaced crank webs;

FIGURE 10 is a view in end elevation of one embodiment of assembly of the kind specified forming part of an internal combustion engine and in accordance with the third and fourth aspects of the present invention, the second part of the crank case being removed; and

FIGURE 11 is a fragmentary view in side elevation and in vertical cross-section on the line 11-11 of Figure 10 but medially of the cylinder and crank case in respect of the magneto.

In the embodiment illustrated in Figure 1, the invention is applied to an assembly of the kind specified forming part of a single cylinder internal combustion engine designed to operate in accordance with a two stroke cycle.

The engine comprises the following main parts, namely a cylinder 10 having an integral head 10a and a reciprocatory piston (not shown), a crank case 11 in which is mounted a crankshaft 12 for rotation about an axis 13, and a connecting rod 14 serving to connect the piston with the crankshaft.

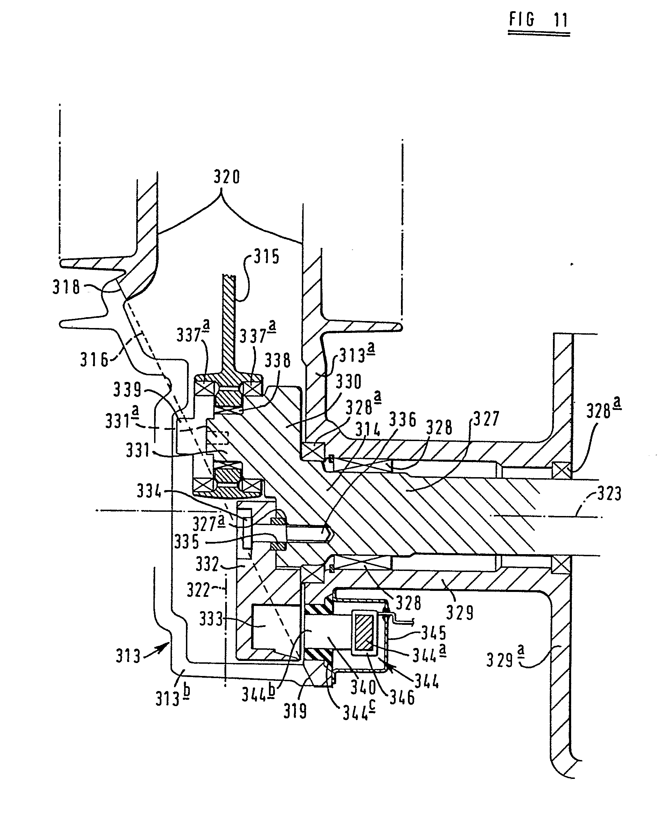

These component parts are more fully described with reference to the embodiment illustrated in Figures 10 and 11.

The lubrication system incorporated in the embodiment illustrated is intended to provide lubrication for the bearing means comprising bearing 15 mounted in a sleeve-like extension 16 of that part 11a of the crank case which is connected to the cylinder 10 and also for the bearing means comprising bearing 17 indicated diagrammatically and which may be a plain, needle roller, or ball, bearing and is contained in the boss or sleeve 19 forming the big end of connecting rod 14, and by means of which the latter is rotationally connected to the crank pin 20.

The lubrication system now described is intended to provide all the lubrication required for these bearings without the necessity for providing a quantity of lubricant in the base of the crank case defined by the part 11a and the separable part 11b in combination. Further, the lubrication provided may be sufficiently effective to

- 14 -

eliminate the need to introduce lubricant by add mixture with the fuel in accordance with the known "petroil" system or to reduce significantly the quantity of lubricant so introduced.

The lubrication system comprises a first chamber 21 defined between the sleeve-like extension 16 of the crank case, a shaft proper 22 of the crankshaft 12, and sealing means indicated diagrammatically at 23 and 24 at opposite ends of the sleeve-like extension 16, and which may be in the form of known garter-type seals.

The lubrication system further comprises a second chamber 25 enclosing the bearing 17 and which is defined between the big end boss 19 and the crank pin 20. This chamber is effectively sealed at its ends by sealing means, for example garter seals again indicated diagrammatically at 18. Alternatively the seal at the outer or free end of the crank pin 20 interposed between the big end bore and a cover 19e may be a plug, such as a welch plug.

These two chambers 21 and 25 are connected by a first duct 26 which comprises a radially extending portion 27 opening from the surface of the shaft proper 22, a main portion 28 extending obliquely with respect to the axis 13 of rotation of the crankshaft in a direction from the portion 27 towards the chamber 25 through the shaft portion proper and the web 29 of the crankshaft, and a terminal portion 30 extending radially of the crank pin axis 31 to emerge onto the surface of the crank pin and communicate with chamber 25. The duct 26 may, as shown, be slightly offset from a diametral plane through the axis 13 or may lie in such plane.

Further, the lubrication system comprises a second duct 32 which also communicates at one end with the second chamber 25 and at its other end with the chamber 21 in the upper part of the latter. This duct lies in a plane offset laterally from the duct 26 so that the two ducts do not intersect effectively but form, in combination with chambers 21 and 25, a circuit along which lubricant is caused to flow.

To promote flow of lubricant around the circuit, a pressure inducing means 35 is provided which may be in the form of a scoop element 36 providing a scoop or pick-up surface 37 which, in response to rotation of the crankshaft in the direction indicated by the arrow 38, causes lubricant in the chamber 21 to be fed under pressure into the entrance of the radial portion 27 of the first duct 26.

As a consequence of rotation of the crankshaft, the chamber 25 (which is of annular form) will itself move orbitally and will describe an annular path, one annular (outer) part of which, herein called the first part, is radially beyond the outer boundary of the chamber 21. Another (inner) part, herein called the second part, describes an annular path which overlaps radially with the chamber 21 when viewed along the axis 13 of the crankshaft.

Due to centrifugal forces, lubricant present in that part of the portion 28a of the first duct 26, and which extends obliquely from the axis 13 towards the terminal portion 30 of this duct, will be subject to a pressure tending to cause it to flow towards the terminal portion 30 of the duct and into the chamber 25. Lubricant contained in the remainder 28b of the duct 26 and in the radial portion 27 will tend, owing to centrifugal forces, to flow towards the outlet of the duct portion 27, but this tendency will be overcome partly by the greater centrifugal force applied to the lubricant in the duct portion 28a compared with that generated in the lubricant in the duct portion 28b and in radial portion 27, and partly by reason of the pressure generated by operation of the scoop element 36.

Consequently lubricant will be fed, in response to rotation of the crankshaft, from the first chamber 21 towards the second chamber 25.

The second duct 32 may be parallel to the axis 13 but is preferably divergent with respect from this axis in a direction from the second chamber 25 towards the first chamber 21 so that there will be pressure on the lubricant therein as a result of centrifugal force tending to make this lubricant flow from the second chamber 25 back to the first chamber 21. Even, however, if the second duct 32 were parallel to the axis 13, the greater pressure in the chamber 25 compared with that in the chamber 21, would promote such flow.

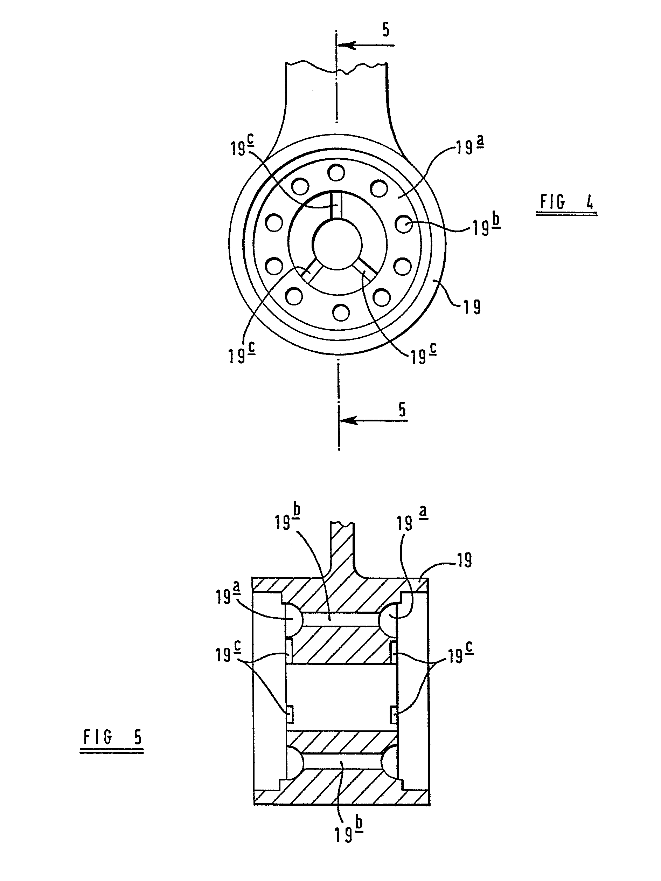

To increase the volume of lubricant present locally within the big end boss 19, and to provide for axial distribution of lubricant along the length of the bearing 17 and the big end boss, as seen particularly in Figures 4 and 5, is provided with a system of passageways.

These comprise annular grooves, for example of part-circular section as shown at 19a concentrically on respective ends of the big end boss 19, such grooves being connected by equi-distantly spaced axially extending bores 19b. The grooves 19a further communicate with the bearing 17 by way of radial grooves 19c. Although in Figure 1 the second duct 32 is shown as opening into an axially presented face of the crank web opposite to one end of the bearing 17, the duct 32 could be so arranged that it communicates at its end nearest the bearing 17 with an appropriate one of the radial grooves 19c anywhere between the inner and outer end thereof but nearer to the axis 13 than the point of emergence of the duct portion 30 onto the surface of the crank pin 20.

It will be evident that by virtue of the greater volume of the first chamber 21 compared with that of the chamber 25, the bearing 17 has potential access to a greater quantity of lubricant than would be the case were it exposed only to lubricant stored in the chamber 25 and not circulated. Further, this lubricant, by virtue of the circulation and the geometry of the two chambers especially the chamber 21, can be kept cooler than would be the case for lubricant confined to a chamber such as 25. Thus, the generally more severe conditions as regards bearing loading which have to be met in respect of bearing 17 are catered for more effectively by the lubricating system now described than would be the case by provision only of the chamber 25 in isolation.

In order to avoid unwanted pressure rise in the lubricant circulating system due to temperature rise after the engine has been in operation for some time, a venting means 39 is provided conveniently in association with chamber 21.

This may comprise bellows 41 of elastic material such as neoprene, the base of which 42 is normally pressed onto a seating surrounding a radial bore 43 in the extension of the crank case, the bellows being contained in a housing 40 having a screw-threaded closure cap 45 bearing on the upper end of the bellows.

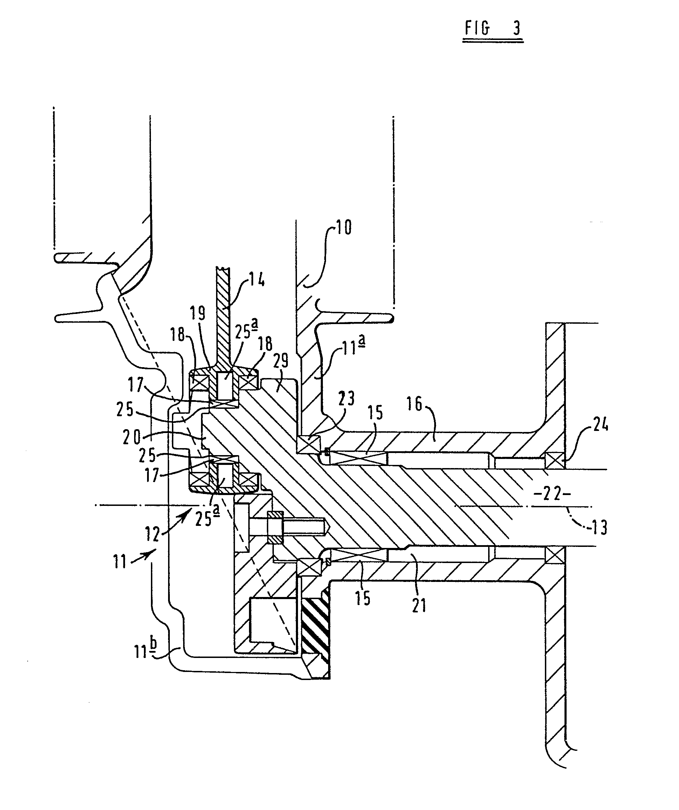

Referring now to Figure 3, this illustrates a modified lubrication system in accordance with the second aspect of the invention hereinbefore referred to.

In this embodiment parts corresponding to those already referred to are designated by corresponding references and the preceding description is to be deemed to apply.

In this embodiment the chamber 25 is extended as indicated at 25a, into the boss 19 of the big end of the connecting rod 14 and therefore provides an increased volume for storage of lubricant compared with that which would be available to the bearing 17 were such enlargement not provided.

This arrangement avoids the complications of mounting the crank pin 20 rotatably in the crank web 29 as in the specific embodiment disclosed in the British patent specification already referred to, such crank pin here being integral with, or structurally separate from, but secured non-rotatably in or to the web.

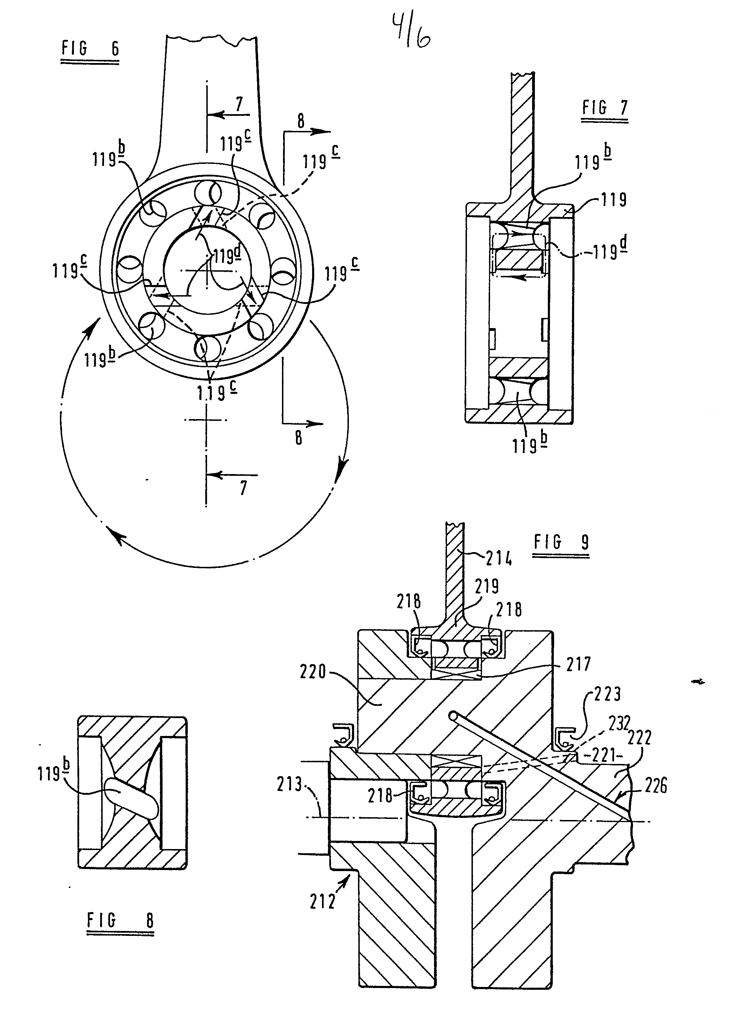

Instead of providing a chamber 25a as shown in the embodiment of Figure 3, it would be possible to make use of the arrangement illustrated in Figures 4 and 5 in which the bores 19b, grooves 19a, and grooves 19c, act as a substitute for the chamber 25a. Similarly the arrangement illustrated in Figures 6 to 8 (hereinafter described) may likewise be used in this case to perform the function of the chamber 25a, such function being in effect carried out by bores 119b and grooves 119c. In all cases lubricant is also stored in the cavities afforded by the garter seals 18 which contribute to that available for lubrication of the big end bearing.

Referring to the modification shown in Figures 6 to 8 parts corresponding to those already described with reference to Figures 4 and 5 are designated by like references with the prefix 1 and the preceding description is to be deemed to apply.

In the modification, bores 119b are inclined with respect to the crank pin axis either helically or rectilinearly to promote flow of lubricant through these bores by virtue of a scoop effect. There will be two annular layers of lubricant, one at each end of the big end. These layers will be subjected to shear by virtue of the drag effect of contact with axially presented faces of the seals 18 and the drag effect of contact with the opposing relatively rotating axially presented faces of the big end itself.

Thus, the holes presented where the bores break into the end face at one end of the big end can exert a scoop effect at the trailing boundaries of the holes, thereby promoting lubricant flow as shown by arrows 119d. Also if the radial grooves 119c are approximately inclined, instead of being truly radial, the equivalent drag effect will tend to assist lubricant flow as shown by the arrows 119d in one direction at one end, and in the other direction at the other end, of the big end.

The arrangements of Figures 4 to 8 may, of course, also be used in the embodiment of Figures 1 and 2.

Although all aspects of the present invention have been specifically described with reference to the drawings as applied to a single cylinder internal combustion engine operating in accordance with a two stroke cycle, it is to be understood that the invention may be applied to a four stroke engine.

As regards the circulatory lubrication system specifically illustrated in Figure 1, when such a system is applied to a four stroke engine the valve operating mechanism may be lubricated by virtue of enclosure in a chamber which is effectively an extension of the main lubricant chamber 16 or the enlargement 16a. Sealing means may be provided in association with the valve stems substantially as described in the prior British patent specification already referred to.

Where a four stroke engine is provided with overhead valves, whether operated by push rods from a lower camshaft, or whether operated from an overhead cam shaft, a cover for the rocker for the upper part of the push rod mechanism would be provided on the cylinder head and this may be so arranged as effectively to form an extension of the chamber 16 in the sense of containing a reservoir of lubricant. In either overhead valve arrangement the lubricant would reach the valve and rocker assembly for the camshaft and follower assembly via appropriate ducts, for example ducts provided in the guides or passageways through which the push rods operate or ducts provided through the housing or opening in which the chain or gear drive to the camshaft is accommodated.

The first and second aspects of the invention may be applied to engines having a crankshaft in which the crank pin, or each crank pin, extends between a pair of axially spaced webs, instead of projecting as a cantilever from a single web, and whether such crankshaft is used in a single cylinder engine or an engine having more than one cylinder.

Such an application is illustrated in Figure 9 in which parts corresponding to those already shown are designated by like references with the prefix 2 and to which the preceding description is to be deemed to apply. The second web 229a of the crankshaft may be a structurally separate part with respect to the remainder of the crankshaft and may be a drive fit or otherwise secured to the crank pin 220.

It will be further understood that the invention may be applied to an assembly of the kind specified arranged and adapted to operate as a gas compressor, for example air compressor, the arrangement of the lubricating system being substantially as shown in Figure 1.

Referring now to Figures 10 and 11, the assembly shown is embodied in a single cylinder two-stroke internal combustion engine and includes the following main parts, namely a cylinder 310, cylinder head 311, piston 312, crank case 313, crankshaft 314 and connecting rod 315.

The cylinder head 311 is integral with the cylinder 310 and the latter in turn is integral with a first part 313a of the crank case 313. The parts may be cast integrally with each other. A second part 313b of the crank case being separable from the first part along parting surfaces indicated diagrammatically by the line 316. A parting surface 316a on the first part 313a of the crank case forms the boundary of an access aperture 317 through which the connecting rod 315 can be introduced to its position of assembly as shown, with part of the connecting rod situated in the interior of the cylinder and part situated in the crank case.

The parting surfaces lie in a reference plane which is conveniently defined by the line 316 extending obliquely from a position 318 adjacent the base end of the cylinder at one side thereof, to a position 319 adjacent to the base of a crank case 313 and situated at the diametrically opposite side of a prolongation of the interior surface 320 of the cylinder, and passing through the cylinder axis. The plane is also defined by a line 321 which is mutually perpendicular to the cylinder axis 322 and the rotary axis 323 of the crankshaft.

It is of course to be understood that the parting surfaces need not lie in a single plane, generally it will be convenient if they are shaped so as to be in or close to that plane, either to one side or the other thereof, looked at collectively, and extending generally obliquely from the position 318 to the position 319 as shown.

The shape of the boundary 316a and the size and orientation of the access aperture 317 is such as to allow the interior surface 320 of the cylinder to be machined by an appropriate tool moved axially along the cylinder axis 322 towards and into the base end of the cylinder and thence towards the head end. The same access aperture also permits of assembly of the crankshaft 314 hereinafter referred to in more detail for introduction into the aperture and along the axis 323.

The crankshaft comprises a shaft portion proper 327 which is supported by axially spaced bearings such as needle roller bearings, one of which 328 is located in a sleeve-like extension 329 of the first part of the crank case and the other of which may be mounted at or adjacent to the end wall (not shown) of a chamber 329a remote from the sleeve-like extension 329, which latter is sealed by garter seals shown diagrammatically at 328a. The chamber 329a may contain an impeller (not shown) providing airflow for engine cooling. The crankshaft further comprises a crank web 330 provided with a crank pin 331, which may be integral with the crank web and is spaced radially from the crankshaft axis 323. The crankshaft further comprises a counter balance weight, the main part 332 of which forms a carrier element for one element 333 of a magnetic circuit, hereinafter referred to. The

- 22 -

0076561

carrier element 332 is detachably secured by a machine screw or bolt 334 extending through a keying member in the form of a locating bar 335 and which is itself seated in a rectangular section locating groove 327a in the end face of the shaft portion proper 327. The bolt 334 has its shank 336 engaging in an internally threaded bore of the shaft proper 327. The bar 335 serves securely to locate the counterweight axially and circumferentially of the axis 323 with respect to the shaft portion proper 327. The bar 335 is made of a material which has a coefficient of thermal expansion compatible with that of the crankshaft proper 327, in the sense that when these two component parts are assembled, as shown in Figure 11, the bar 335 is seated in a channel-section groove in the crankshaft proper and such assembly takes place at a normal temperature, no looseness or lost motion will develop between the bar 335 and the crankshaft proper 327 at the maximum temperature reached during normal operation.

As regards securement of the bar 335 to the carrier element 332 which forms the main part of the counterbalance weight, the preferred arrangement is that the bar should be cast into the counterweight during formation of the latter. Thus the bar would be supported in the mould in which the counterweight is cast. The bar 335 is thus partly enveloped or invested at its ends by the metal of the counterweight which is thus formed with grooves of a shape conforming precisely to that of the cross-section of the bar. Additionally the bar may have holes into which the metal of the counterweight flows to form dowells or, as shown, the bar may be provided with dowel pins which extend into the counterweight. Typically, if the crankshaft portion proper is made of a ferrous metal such as steel or cast iron, the bar 335 may also be made of a ferrous metal such as steel, or possibly of bronze, and the carrier portion 332 may be made of a zinc based alloy having a relatively low coefficient of thermal expansion but also having a melting point lower than that of the material of the bar. Since the latter is present in the mould or die during formation of the carrier 332, the temperature of the latter is, during the casting in process, substantially higher than that which will ever be reached during normal operation of the engine and there will, therefore, be no loosening of the bond between the bar and the carrier element 332.

An alternative course which may be employed is to form the carrier element 332 of brass or an aluminium alloy, which are both non-magnetic materials, and which can have a composition selected to provide a lower melting point than that of the bar 335, whether the latter be made of steel or bronze.

The carrier element is of generally C-shaped form and is substantially co-planar and of the same thickness measured axially of the crankshaft as the web 330.

With regard to the method of assembly of the piston and connecting rod, the piston, piston rings, and a connecting rod are pre-assembled with each other outside the cylinder by passing the gudgeon pin 324 through the bearing openings in the piston and through the bearing aperture at the little end 325 of the connecting rod.

The piston and connecting rod, complete with thrust pads are then introduced through the aperture 317 into the base end of the cylinder, the piston pushed towards the head end of the cylinder. The gudgeon pin axis is selected to be in a position of rotation about the cylinder axis which is $90^{\circ}$ from its normal position , or approximately so, or is brought into that position after assembly of the piston into the cylinder by appropriate rotation of the piston about the cylinder axis, so that the connecting rod can swing in a plane at right angles to its normal plane of movement. This permits the big end 326 of the connecting rod to be swung towards the aperture 317 and to be so positioned as to provide unobstructed access for introduction of the crankshaft 314. If necessary use may be made of the radial extension or notch 317a to accommodate the big end during this phase of the operation.

The crankshaft is introduced through the same access opening 317 into the bearing 328 preferably while in a position in which the crank pin is remote from the base end of the cylinder so that the crank web can readily clear the lower extremity of the connecting rod.

When installed, the crankshaft is then rotated to bring the crank pin to a position approximately mid-way between the bottom and top dead centre position. The connecting rod is then drawn down the cylinder and rotated about the cylinder axis 322 through 90°, or approximately so, to bring it into, or approximately into, its normal plane of movement. The connecting rod thus describes the surface of a cone having its axis coincident with that of the cylinder. By appropriate relative movement of the crankshaft and the connecting rod the big end can be passed over the free end of the crank pin.

To enable this movement to take place, sufficient diametral clearance is provided between the crank pin 331 and the interior surface of the bore of the unsplit big end of the connecting rod 315. This clearance is thereafter eliminated by installation on the crank pin 331 of bearing means 338 which may be a needle roller or a plain bearing. Oils seals such as garter seals 337a, 337b are provided at each end of the big end bore, the outermost seal engaging a removable cap 339 secured in any suitable manner to the end of the crank pin as by being a press fit or by a bolt (not shown) engaging in threaded bore 331a. If desired an alternative or supplementary drive can be taken from the crank pin making use of a drive transmitting element secured to the crank pin by said bolt, or the

- 25 -

**0076561**

boss at the end face of the cap 339 may serve as such an element.

With the crank pin in the top dead centre position as shown in Figure 10, the bar 335 with the carrier element 332 and one element 333 of the magnetic circuit supported in the carrier are then secured by bolt 334 to the shaft proper of the crankshaft collectively to act as a counterweight.

Referring now to the magneto, the section plane is a vertical median plane through the cylinder axis. This comprises two elements to collectively form part of a magnetic circuit.

One of the elements 344 is contained in a housing 45 stationarily mounted on the crank case externally thereof, preferably with the intervention of sealing means between the housing 345 and the crank case. This element may comprise a connecting limb 344a extending circumferentially of the crank case adjacent to the right-hand end as seen in Figure 11 and axially projecting poles 344b either two (as shown) or three which extend through respective apertures with sufficient clearance to avoid any unwanted magnetic leakage.

Non-magnetic sealing material 344c is interposed between the projecting poles such as 344b and the boundaries of the apertures into which they extend.

Winding means forming part of an electrical circuit for generating sparking current at a suitably high voltage is carried on an appropriate limb of the stationary element of the magnetic circuit, e.g. the connecting limb in the case of a two-pole U-shaped structure or the central limb of a 3-pole E-shaped structure. The two or three free ends forming pole faces are presented towards an appropriate number of apertures in the adjacent end wall of the part 313a of the crank case, each of which contains a plug or filling of magnetically permeable (but not magnetically susceptible) material 340.

The other (movable) element of the magnetic circuit is, as hereinbefore mentioned, carried by the carrier element 332. This other element comprises a permanent magnet having a connecting limb 341 and and circumferentially spaced pole pieces 342, 343 of a spacing selected to produce a flux charge reversal in that limb 344a of the stationary element carrying the winding 346 as the movable element moves past it during rotation of the crankshaft.

The means for controlling the admission and exhaust of the working fluid in the engine now described may comprise port means (not shown) appropriately arranged to provide for operation in accordance with a two-stroke cycle.

It would be possible, however, to apply the present invention to an engine operating in accordance with a four-stroke cycle, in which case admission and exhaust of the working fluid would be controlled by valves operated in a conventional manner.

In this case the valve operating mechanism may be contained in an extension of chamber 329 or 329a. For a 4-stroke overhead valve engine the valves may be assembled by passing them up through the cylinder bore prior to assembly of the piston and connecting rod. For a side valve engine using a head integral with the cylinder barrel and part of the crank case covers may be provided closing openings (or an opening) in the head in alignment with the valve seatings and the valves would be assembled through such openings and the covers (or cover) thereafter secured in position.

An overhead valve engine, whether having an overhead camshaft or push rod and rocker drive, would of course have a normal detachable cover on the head enclosing the valve drive mechanism.

Further, although described with reference to a single cylinder engine, the third and fourth aspects of the invention may be applied to an engine having more than one cylinder, for example one in which two cylinders are arranged in narrow or right angled V-formation. In this case the crank case may have its first portion integral with both cylinders and may present an access aperture at each of its ends closed by a respective part (equivalent to the second crank case part hereinbefore described).

The engine may be constructed to eliminate the need for providing an oil sump within the crank case or supply of lubricant by the "petroil" system as described and claimed in British patent specification No. 1,296,830 granted to the inventor of the present invention, although it is applicable to conventionally lubricated engines.

Further, instead of mounting the stationary element of the magnetic circuit in a position to present its poles axially towards those of the movable magnetic element, the pole faces of both elements may be presented radially, the stationary element then being positioned on a circumferential instead of on an axially presented face of the crank case. It will be understood that the stationary element of the magnetic circuit could be mounted on the second part of the crank case, i.e. the cover 13b if desired, especially where a radial disposition of pole faces is adopted.

The assembly in accordance with the third aspect of the invention may also be applied to compression ignition engines and to gas compressors such as air compressors.

CLAIMS:

1.   An assembly of the kind specified which includes a lubrication system for a crankshaft supporting bearing means (15), and a bearing means (17) at the connection between the connecting rod (14) and crank pin (20), such system comprising a first lubricant storage chamber (21) at the supporting bearing means (15), a second lubricant storage chamber (25) at the connecting rod bearing means (17), a first duct (26) extending through the crankshaft (12) serving to connect the first chamber (21) to the second chamber (25), a second duct (32) also extending through the crankshaft (12) serving to connect the second chamber (25) to the first chamber (21) to form a lubricant circuit, and means (35) responsive to rotation of the crankshaft to cause lubricant to circulate around the circuit.

2.   An assembly according to claim 1 wherein the second lubricant storage chamber (25) moves in an orbit in consequence of crankshaft (12) rotation, having a first, outer, part which is radially beyond the first lubricant storage chamber (21) and having a second, inner, part extending radially inwardly of at least part of the first lubricant storage chamber (21), the first duct means (26) being so arranged as to connect the first chamber (21) with the outer part of the second chamber (25), and the second duct (32) being so arranged as to connect the inner part of the second storage chamber (25) with the first chamber (21).

3.   An assembly according to either of claims 1 and 2 wherein the means (35) to cause lubricant to circulate is provided in, or in association with the first chamber (21), and comprises a pressure inducing means which is operable in response to rotation of the crankshaft (12) for causing a pressure gradient to be established along the first duct (26) in a direction to bring about flow of the lubricant from the first chamber (21) to the second chamber (25), the pressure in the first chamber (21) however, being maintained below a value which would prevent delivery of lubricant from the second part of the second chamber (25) back to the first chamber (21).

4.    An assembly according to either of claims 2 and 3 wherein that end of the second duct (32) which communicates with the second part of the second chamber (25) is situated radially inwardly of, or at the same radius as, that end of the second duct (32) which communicates with the first chamber (21).

5.    An assembly according to either of claims 3 and 4 wherein the pressure inducing means for establishing a pressure gradient in the first duct comprises a scoop means (36) provided on the crankshaft (12) and rotating therewith for collecting lubricant from the first chamber (21) as the crankshaft (12) rotates and feeding it into that end of the first duct (26) which communicates with the first chamber (21).

6.    An assembly according to any one of the preceding claims wherein the second lubricant storage chamber (25, 25a) is formed as a cavity in the connecting rod (14) itself, and the crank pin (20) is integral with or fast with the crank web (29).

7.    An assembly according to claim 6 wherein the chamber (25, 25a) is afforded in part by bores (19b) extending through the big end (19) of the crankshaft in a direction generally lengthwise of the crank pin axis and of such form or disposition as to promote flow from one end to the other end of the bore concerned.

8.   An assembly according to claim 7 wherein the end faces of the big end of the crankshaft have grooves (19c) extending radially, or approximately radially, and in combination with the bores (19b) promoting circulation of lubricant through the big end (19).

9.   An assembly of the kind specified forming part of an internal combustion engine of the kind referred to and modified in that the second lubricant storage chamber (25a) is formed as a cavity in the connecting rod (14) itself, and that the crank pin is integral with or fast with the crank web.

10.  An assembly of the kind specified wherein the cylinder head (311), cylinder (310), and a first part (313a) of the crank case (313) are all integrally connected with each other, and the crank case (313) comprises a second part (313b) secured to, but separable from, the first part (313a) by way of parting surfaces defining, in the case of the first part, a single access aperture (317) having the following characteristics:

    (a) presention of an unobstructed area having a boundary (316a) of a form, size and orientation to ˙circumscribe an axial projection of the interior surface of the cylinder (310) as viewed along the cylinder axis (322),

    (b) a shape, size and orientation to present an unobstructed passageway for introduction of the piston (310) and connecting rod (315) into the base end of the cylinder and crank case for assembly of the connecting rod (315) with the crankshaft (314).

11.  An assembly according to claim 10 wherein the geometry of the parting surface which forms the boundary (316a) of the aperture (317) in the first part (312a) of the crank case (313) lies in or close to a plane (herein called the boundary plane) defined by two intersecting reference lines, one (316) of which extends from a position adjacent to one side of the cylinder (310) at the base end of the cylinder (310) obliquely away from the cylinder (310) towards the base of the crank case (313) passing through a prolongation of the axis (322) of the cylinder (310) and terminating adjacent to the opposite side of the cylinder, and the other (321) of which is mutually perpendicular to the axis (322) of the cylinder (310) and the crankshaft axis (323).

12. An assembly according to either of claims 10 and 11 wherein the crankshaft (314) comprises a shaft proper (327) by means of which the crankshaft (314) is rotatably supported in the crank case (313), a crank web (330) extending radially in one direction from the shaft proper (327) and carrying the crank pin (331), and a counter balance weight (332) situated at a position diametrically opposed to the crank web and crank pin but coplanar or approximately coplanar with the crank web, the counter balance weight (332) being formed as a structurally separate part which is detachably secured to the remainder of the crankshaft (314).

13. A method of assembling the component parts of an assembly of the kind specified comprising the steps of:-
    (a) assembling together the piston (312) and a connecting rod (315) having an unsplit big end (326) while access to the piston (312) is available for passage of a gudgeon pin (324) through aligned openings in the little end (325) of the connecting rod (315) and piston (312),
    (b) introducing the piston (312) through said single aperture (317) into the base end of the cylinder (310),
    (c) moving the big end (326) of the connecting rod (315) while the connecting rod (315) remains assembled at its little end (325) with the piston (312) into a position in the crank case (313) and cylinder (312) such as to afford access to a support bearing (328) for the crankshaft (314),

(d) introducing the crankshaft (314) presenting a free-ended crank pin (331) into the support bearing (328) afforded by the crank case (313) through said single aperture (317) with the free end of the crank pin (331) presented towards said aperture (317),

(e) relatively moving the connecting rod (315) and crankshaft (314) to pass the big end (326) of the connecting rod (315) over the crank pin (331) preparatory to closing the single aperture (317) by assembly and securement of the second part (313<u>b</u>) of the crank case (313) to the first part (313<u>a</u>) of the crank case.

14. A method according to claim 13 wherein the moving of the big end (326) of the connecting rod (315) into the position affording access to the crankshaft support bearing (328) entails rotation of the piston (312) with the connecting rod (315) connected thereto by way of the gudgeon pin (324) about the axis (322) of the cylinder (310).

15. A method according to claim 14 wherein rotation of the piston (312) about the axis (322) of the cylinder (314) as aforesaid is also entailed in passing the big end (326) over the crank pin (331).

16. An assembly of the kind specified forming part of an internal combustion engine in which the mixture of working fluid and fuel undergoes ignition by an electric spark produced by an magneto comprising relatively movable elements, one (333) at least of which is a permanent magnet and which collectively define a magnetic circuit of a configuration to provide a magnetic flux change in at least one limb of the magnetic circuit in response to movement of one (333) of these elements passed the other (344) element, one (333) of these elements being mounted on the crankshaft (314) and the other (344) on the crank case (313), and wherein the crankshaft (314) has a counter balance weight (332) made of non-magnetic material and which forms a carrier portion for one (333) of the elements of the magnetic circuit of a magneto, and is itself held in secured assembled relation with the remainder (327) of the crankshaft (314) through the intermediary of attachment means (335) of a form, and of a material, selected to avoid loosening due to differential thermal expansion between the carrier portion (332) of the counterweight and the remainder (327) of the crankshaft.

17. An assembly according to claim 16 wherein the attachment means includes a keying member (335) having a thermal coefficient of expansion compatible with that of the remainder (327) of the crankshaft, in the sense that the difference between the two coefficients of expansion is small enough not to give rise to any loosening under temperature cycling in normal operation of the engine between the keying member (335) and the remainder (327) of the crankshaft, the keying member (335) being made fast with respect to the carrier portion (332) of the counterweight during assembly at a temperature higher than that reached during normal operation of the engine so that, despite a greater difference of the coefficient of expansion as between the keying member (335) and the carrier portion (332) of the counterweight, again no loosening takes place.

18. An assembly according to either of claims 16 and 17 wherein the disposition of the movable element (333) of the magnetic circuit, which element (333) is mounted on the crankshaft (314), is one in which it presents pole faces axially of the crankshaft (314), and the other element (344) of the magnetic circuit (stationary) is mounted on one end of the crank case (313) and presents pole faces (344b) internally of the latter for cooperation with those of the movable element (333) as the crankshaft rotates.

19. An assembly according to any one of claims 16 to 18 wherein the attachment means comprises a keying member (335) invested or embraced by the material of the counterbalance weight (332), the latter being formed as a casting in which the keying member (335) is present as a solid state insert during formation of the counterbalance weight (332) by casting.

20. An assembly according to claim 19 wherein both the crankshaft (314) and the keying member (335) are of ferrous metal.

1/6

FIG 1

FIG 2

FIG 3

FIG 4

19$\underline{c}$
19$\underline{a}$
19$\underline{b}$
19
19$\underline{c}$
19$\underline{c}$

5
5

FIG 5

19$\underline{b}$
19$\underline{a}$
19
19$\underline{a}$
19$\underline{c}$
19$\underline{c}$
19$\underline{b}$

FIG 6

$119\underline{b}$

$119\underline{c}$

$119\underline{c}$

$119\underline{c}$

$119\underline{d}$

$119\underline{c}$

$119\underline{c}$

$119\underline{b}$

$1.19\underline{c}$

7   8

8   7

FIG 7

$119\underline{b}$

119

$119\underline{d}$

$119\underline{b}$

FIG 9

214

218   219   218

220

217

223

232   222

221

213

218   226

212

$119\underline{b}$

FIG 8

FIG 10

FIG 11

0076561

**European Patent Office**

**EUROPEAN SEARCH REPORT**

Application number

EP 82 30 3907

## DOCUMENTS CONSIDERED TO BE RELEVANT

| Category | Citation of document with indication, where appropriate, of relevant passages | Relevant to claim | CLASSIFICATION OF THE APPLICATION (Int Cl 3) |
|---|---|---|---|
| Y | DE - B - 1 476 136 (VOLKSWAGEN)  <br> * figures 1,2; column 2, line 61 - column 3, line 27; claim 1 * | 1,4 | F 01 M 1/06 <br> F 16 C 3/14 <br> F 02 P 1/02 |
| Y | FR - A - 2 097 759 (LIST) <br> * figures 1-4; page 5, line 7 - page 6, line 11; page 6, lines 23-31 * | 1 | |
| A | US - A - 3 037 583 (FORD) <br> * figures 1-3; column 2, lines 44-57 * | 1,3,5 | |
| A | GB - A - 1 036 367 (HATZ) <br> * figures 1,2; page 2, lines 21-72 * | 1,5,6 | TECHNICAL FIELDS SEARCHED (Int Cl 3) <br><br> F 01 M <br> F 16 C |
| A | FR - A - 481 322 (SCOTT) <br> * figure 1; page 1, lines 13-53 * | 1,7,9 | |
| D,A | US - A - 3 641 990 (KINNERSLY) <br> * figure 1; column 1, lines 19-63 * | 1,2 | |

The present search report has been drawn up for all claims

| Place of search | Date of completion of the search | Examiner |
|---|---|---|
| The Hague | 29-09-1982 | VON ARX |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent
Office

---

| **CLAIMS INCURRING FEES** |
|---|

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

---

| X | **LACK OF UNITY OF INVENTION** |
|---|---|

The Search Division considers that the present European patent application does not comply with the requirement of unity of invention and relates to several inventions or groups of inventions.
namely:

```
1. claims  1-9   Cubrication system for the
                 bearing means
2. claims 10-15  Construction and method of
                 assembling piston, cylinder
                 and crankshaft assembly
3. claims 16-20  Ignition system for an inter-
                 nal combustion engine
```

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid.

namely claims:

☒ None of the further search fees has been paid within the fixed time limit. The present European search report has been drawn up for those parts of the European patent application which relate to the invention first mentioned in the claims.

namely claims  1-9